# EUROPEAN PATENT APPLICATION

(11) **EP 2 642 772 A1**
(43) Date of publication of application: **25.09.2013**
(21) Application number: 11841402.8
(22) Date of filing: 07.11.2011
(51) Int. Cl.: H04W 4/04, H04W 84/10, H04W 92/20

(54) **POSITION INFORMATION TRANSMISSION DEVICE, POSITION INFORMATION TRANSMISSION SYSTEM AND POSITION INFORMATION SETTING METHOD**

(30) Priority: 19.11.2010 JP 2010258779
(71) Applicant: Funai Electric Co., Ltd., Nakagaito Daito-shi Osaka 574-0013 (JP)
(72) Inventor: KIMURA Akira, Daito-shi Osaka 574-0013 (JP)
(74) Representative: Grünecker, Kinkeldey, Stockmair & Schwanhäusser
(86) International application number: PCT/JP2011/075553
(87) International publication number: WO 2012/066952

(57) **Abstract**

[Problem] To register various information such as position information on plural position information transmission devices without requiring complicated equipments.

[Solution] An IMES transmitter 20 has a control unit 21, a non-volatile memory 23 to record a transmitter number of the IMES transmitter 20, and a data I/F 24. When registration data Dset associating the transmitter number with position information is input from the data I/F 24, the control unit 21 records the position information included in the registration data Dset if the registration data Dset includes the transmitter number of the IMES transmitter 20, and transmits the registration data Dset from a transmitting unit 22 if the registration data Dset includes the transmitter number of another position information transmission device.

## Description

### TECHNICAL FIELD

The present invention relates to a position information transmission device, a position information transmission system, and a position information setting method. In particular, the present invention is related to a position information transmission device that transmits, by a wireless signal, position information indicating an installation position of the position information transmission device within a predetermined distance around the position information transmission device, a position information transmission system that has position information transmission devices and a control device to control the positional information assigned to the position information transmission devices, and a position information setting method that assigns position information to plural position information transmission devices.

### BACKGROUND ART

Japanese Patent Application Publication 2010-38850 discloses a position information setting device to assign position information of position information transmitters that compose a position information transmission system. The position information transmitters transmit the assigned position information within a predetermined distance around the position information transmitters. Therefore, position information receivers such as a mobile terminal can receive various services based on the received position information. In addition to the position information, other information can be assigned to the position information transmitters to transmit them within the predetermined distance. (See Japanese Patent Application Publication 2007-278756) As a method to specify such information from the position information setting device to the position information transmitters, a method using a wireless communication such as Bluetooth (registered trademark) or wireless LAN (Local Area Network) is disclosed. (See Japanese Patent Application Publication 2009-085928)

### PRIOR ART DOCUMENTS

### [Patent Documents]

[Patent Document 1] Japanese Patent Application Publication 2010-38850
[Patent Document 2] Japanese Patent Application Publication 2007-278756
[Patent Document 3] Japanese Patent Application Publication 2009-085928

### DISCLOSURE OF THE INVENTION

### [Problems to be Solved by the Invention]

In the above described technologies, wired or wireless communication means should be separately prepared to register the position information on each of the position information transmitters.

However, if a method using a wired connection to register the position information on each of the position information transmitters is adopted, it is difficult to install the position information transmitters on the existing physical environment because many wires are needed, and that can be a reason to avoid installing the position information transmission system. In addition, an amount of hardware and software to be installed is increased because a wired I/F should be prepared on each of the position information transmitters.

Alternatively, if a method using a wireless communication to register the position information on each of the position information transmitters is adopted, an amount of hardware and software to be installed is increased depending on the configuration of wireless I/F because a means for communicating via the wireless network should be prepared on each of the position information transmitters.

Alternatively, it can be also assumed that the position information is registered to the position information transmitters by using a portable recording medium. However, an amount of hardware and software to be installed is increased similar to the case of the wireless communication. In addition, processes to register various information are not realistic because the position information transmitters may be installed on a place such as a ceiling. Furthermore, monitoring performance is worse because it is difficult to quickly find the position information transmitters that are not operating normally.

After considering the above, the present invention has an aim to provide a position information transmission device, a position information transmission system, and a position information setting method in order to register various information such as position information on plural position information transmission devices without requiring complicated equipments.

### [Means for Solving the Problem]

A position information transmission device according to one aspect of the present invention is a position information transmission device having a transmitting unit to transmit, by wireless, a spread spectrum signal generated based on position information indicating an installation position, the device comprising:
a recording unit that records a unique identification information of the position information transmission device, the position information, and an ID of a pseudo spread code for spreading a spectrum of the position information,
a communication interface for communicating with an external computer, and
a control unit that, when data associating the identification information with the position information is input from the communication interface, controls the recording unit to record the position information associated with the identification information if the data includes the identification information of the position information transmission device, and controls the transmitting unit to transmit the data by wireless if the data includes the identification information of another position information transmission device.

In an alternative aspect of the present invention, when data associating the identification information with the ID of the pseudo spread code is input from the communication interface, the control unit controls the recording unit to record the ID of the pseudo spread code associated with the identification information if the data includes the identification information of the position information transmission device, and controls the transmitting unit to transmit the data by wireless if the data includes the identification information of another position information transmission device.

In an alternative aspect of the present invention, the recording unit can record a predetermined information uniquely assigned to the position information transmission device, and
when data associating the identification information with the predetermined information is input from the communication interface, the control unit controls the recording unit to record the predetermined information associated with the identification information if the data includes the identification information of the position information transmission device, and controls the transmitting unit to transmit the data by wireless if the data includes the identification information of another position information transmission device.

In an alternative aspect of the present invention, the recording unit can record a name of the position information transmission device, and
when data associating the identification information with the name is input from the communication interface, the control unit controls the recording unit to record the name associated with the identification information if the data includes the identification information of the position information transmission device, and controls the transmitting unit to transmit the data by wireless if the data includes the identification information of another position information transmission device.

In an alternative aspect of the present invention, the communication interface has a function to receive the data separately from the external computer when receiving data exceeding a predetermined size.

A position information transmission device according to another aspect of the present invention is a position information transmission device having a transmitting unit to transmit, by wireless, a spread spectrum signal generated based on position information indicating an installation position, the device comprising:
a recording unit that records a unique identification information of the position information transmission device, the position information, and an ID of a pseudo spread code for spreading a spectrum of the position information,
a receiving unit that receives the spread spectrum signal transmitted by wireless, and
a control unit that, when data associating the identification information with the position information is included in the spread spectrum signal received by the receiving unit, controls the recording unit to record the position information associated with the identification information if the data includes the identification information of the position information transmission device, and controls the transmitting unit to transmit the data by wireless if the data includes the identification information of another position information transmission device.

In an alternative aspect of the present invention, when data associating the identification information with the ID of the pseudo spread code is included in the spread spectrum signal received by the receiving unit, the control unit controls the recording unit to record the ID of the pseudo spread code associated with the identification information if the data includes the identification information of the position information transmission device, and controls the transmitting unit to transmit the data by wireless if the data includes the identification information of another position information transmission device.

In an alternative aspect of the present invention, the recording unit can record a predetermined information uniquely assigned to the position information transmission device, and
when data associating the identification information with the predetermined information is included in the spread spectrum signal received by the receiving unit, the control unit controls the recording unit to record the predetermined information associated with the identification information if the data includes the identification information of the position information transmission device, and controls the transmitting unit to transmit the data by wireless if the data includes the identification information of another position information transmission device.

In an alternative aspect of the present invention, the recording unit can record a name of the position information transmission device, and
when the data associating the identification information with the name is included in the spread spectrum signal received by the receiving unit, the control unit controls the recording unit to record the name associated with the identification information if the data includes the identification information of the position information transmission device, and controls the transmitting unit to transmit the data by wireless if the data includes the identification information of another position information transmission device.

In an alternative aspect of the present invention, when the receiving unit receives the same spread spectrum signal in succession, the control unit does not control the transmitting unit to transmit, by wireless, the data included in the spread spectrum signal received for the second time or later even if the identification information of another position information transmission device is included in the spread spectrum signal.

In an alternative aspect of the present invention, when the receiving unit receives the same spread spectrum signal more than once in a predetermined time period, the control unit does not control the transmitting unit to transmit, by wireless, the data included in the spread spectrum signal received for the second time or later even if the identification information of another position information transmission device is included in the spread spectrum signal.

In an alternative aspect of the present invention, a position information transmission system, comprising:
a fist position information transmission device that has a first transmitting unit to transmit, by wireless, a spread spectrum signal generated based on position information indicating an installation position,
a second position information transmission device that has a second transmitting unit to transmit, by wireless, the spread spectrum signal generated based on the position information indicating the installation position, and
a control device that controls the positional information of the position information transmission devices, wherein
the control device has
a control device side communication interface to be connected to the first position information transmission device and
a means to transmit data associating unique identification information of each of the position information transmission devices with the position information to the first position information transmission device via the communication interface,
the first position information transmission device has
a first recording unit that records the unique identification information of the first position information transmission device, the position information, and an ID of a pseudo spread code for spreading the spectrum of the position information,
a transmission device side communication interface for communicating with the control device, and
a first control unit that, when data associating the identification information with the position information is input from the transmission device side communication interface, controls the first recording unit to record the position information associated with the identification information if the data includes the identification information of the first position information transmission device, and controls the first transmitting unit to transmit the data by wireless if the data includes the identification information of other than the first position information transmission device.
the second position information transmission device has
a second recording unit that records the unique identification information of the second position information transmission device, the position information, and the ID of the pseudo spread code for spreading the spectrum of the position information,
a second receiving unit that receives the spread spectrum signal transmitted by wireless, and
a second control unit that, when data associating the identification information with the position information is included in the spread spectrum signal received by the second receiving unit, controls the second recording unit to record the position information associated with the identification information if the data includes the identification information of the second position information transmission device, and controls the second transmitting unit to transmit the data by wireless if the data includes the identification information of other than the second position information transmission device. Note that ordinal numbers such as "first" and "second" are added in order to distinguish one element having a certain name from another element having the same name.

In an alternative aspect of the present invention, the second position information transmission device is located in a transmitting area where the first position information transmission device can transmit the spread spectrum signal by wireless, and the first position information transmission device transmits, by wireless, the data associating the identification information with the position information as the spread spectrum signal from the first transmitting unit.

In an alternative aspect of the present invention, different IDs of the pseudo spread code are assigned to the first position information transmission device and the second position information transmission device.

In an alternative aspect of the present invention, another position information transmission device is located in a transmitting area where the second position information transmission device can transmit the spread spectrum signal by wireless, and the another position information transmission device has
a receiving unit that receives the spread spectrum signal transmitted by wireless, and
a control unit that, when data associating the identification information with the position information is included in the spread spectrum signal received by the receiving unit, controls the recording unit of the another position information transmission device to record the position information associated with the identification information if the data includes the identification information of the another position information transmission device.

In an alternative aspect of the present invention, different IDs of the pseudo spread code are assigned to the second position information transmission device and the another position information transmission device.

In an alternative aspect of the present invention, the first position information transmission devise further has a separate transmission means that separates the data and controls the first transmitting unit to transmit separate data sequentially when the data to be transmitted from the first transmitting unit exceeds a predetermined size, and the second position information transmission devise further has a separate receiving means that restores the original data from the plural separate data received by the second receiving unit.

An alternative aspect of the present invention is a position information setting method for at least a first position information transmission device, a second position information transmission device and a control device to control position information of the position information transmission devices, wherein
the position information is assigned from the control device to each of the position information transmission devices, the method comprising:
a data input step in which data associating identification information with the position information is input from the control device to the first position information transmission device via a predetermined communication interface,
a first setting step in which the position information associated with the identification information is assigned to the first position information transmission device if the identification information included in the data input to the first position information transmission device is unique identification information for the first position information transmission device,
a first transmitting step in which the first position information transmission device converts the data to a spread spectrum signal and transmits the spread spectrum signal by wireless if the data input to the first position information transmission device includes identification information of other than the first position information transmission device,
a second setting step in which the position information associated with the identification information is assigned to the second position information transmission device if the data included in the spread spectrum signal received by the second position information transmission device includes unique identification information for the second position information transmission device,
a second transmitting step in which the second position information transmission device converts the data to a spread spectrum signal and transmits the spread spectrum signal by wireless if the data included in the spread spectrum signal received by the second position information transmission device includes identification information of other than the second position information transmission device.

Note that the above described position information transmission device includes various aspects such as performed by being mounted on other devices or performed with other methods. In addition, the present invention can be realized as a control method having processes corresponding to the configuration of the position information transmission devise, a program enabling a computer to realize a function corresponding to the configuration of the position information transmission devise, or computer readable recording medium recording the program.

### [Effects of the Invention]

As explained above, by using the present invention, the position information can be registered on plural position information transmission devices with simple equipment.
In the alternative second and seventh aspects, the ID of the pseudo spread code can be registered on plural position information transmission devices with simple equipment.
In the alternative third and eighth aspects, the predetermined information can be registered on plural position information transmission devices with simple equipment.
In the alternative fourth and ninth aspects, the name of the position information transmission device can be registered on plural position information transmission devices with simple equipment.
In the alternative fifth aspect, larger size data can be input to the position information transmission devices.
In the alternative tenth and eleventh aspects, the position information or the like can be registered efficiently.
In the alternative thirteenth to sixteenth aspects, positional relation of each of the position information transmission devices can be adequately decided based on the transmitting areas of the position information transmission devices.
In the alternative seventeenth aspect, larger size data can be transferred and received between the position information transmission devices.

### BRIEF DESCRIPTION OF THE DRAWINGS

Fig. 1 is a schematic diagram showing an outline of a positioning system 100.
Fig. 2 is a configuration diagram showing an example of an IMES 200.
Fig. 3 is a schematic diagram showing an alignment example of IMES transmitters of the IMES 200.
Fig. 4 is a schematic diagram showing another alignment example of IMES transmitters of the IMES 200.
Fig. 5 is a block diagram showing a configuration of an IMES transmitter 20.
Fig. 6 is a schematic diagram showing a data structure of a non-volatile memory 23.
Fig. 7 is a block diagram showing a configuration of an IMES transmitter 30.
Fig. 8 is a flow chart of a process for registering position information on a control computer 11.
Fig. 9 is a flow chart of a process for registering position information on the IMES transmitter 20.
Fig. 10 is a flow chart of a process for registering position information on the IMES transmitter 30.
Fig. 11 is a flow chart of a process for registering position information on the IMES transmitter 30 wherein the number of transmissions of a registration data Dset is limited.

### BEST MODES FOR CARRYING OUT THE INVENTION

Hereafter, embodiments of the present invention will be explained in the following order.
(1) Configuration of a positioning system:
(2) Process for registering data:
(3) General overview and variation examples:

### (1) Configuration of a positioning system:

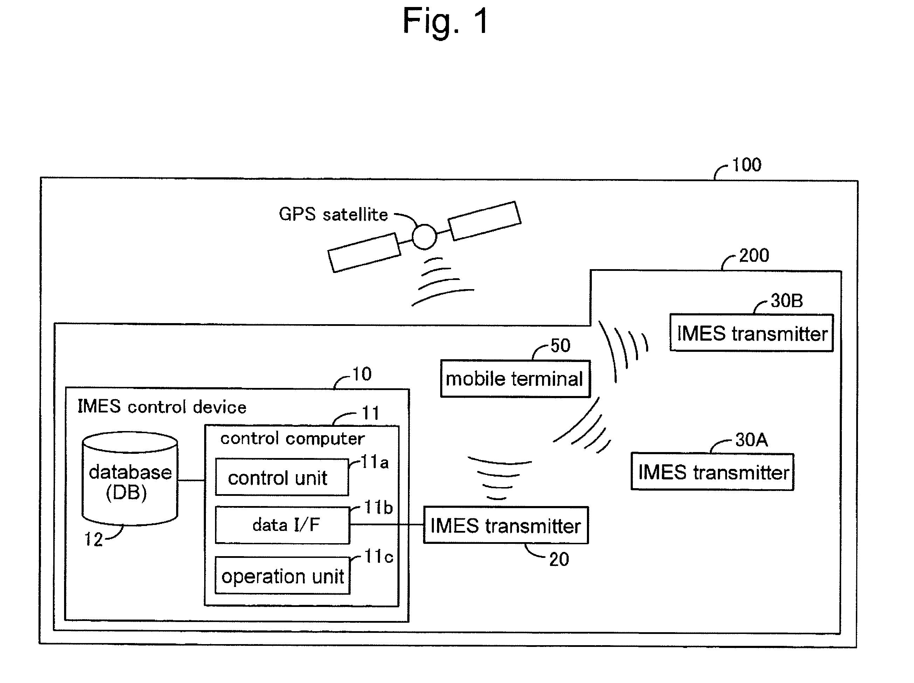

Fig. 1 is a schematic diagram showing an outline of a positioning system 100 of the present embodiment. The positioning system 100 can transmit a navigation message from a GPS (Global Positioning System) satellite to a mobile terminal 50 located outdoors. The navigation message is a predicted ephemeris of the GPS satellite transmitted by radio waves, and includes information such as orbital information necessary for calculating a position of the satellite. The mobile terminal 50 can identify its own position by calculating its own position based on the received navigation message. In addition, the positioning system 100 can transmit position information from IMES transmitters to the mobile terminal 50 located in a providing area of an IMES (Indoor Messaging System) 200, which is formed indoors or in a predetermined area. The position information is information that indicates an installation position of each of the IMES transmitters that compose the IMES. The mobile terminal 50 identifies its position based on the received position information.
The mobile terminal 50 can receive various services from an information providing server (not illustrated) according to the position information by transmitting the position information calculated or identified as explained above to the information providing server.

The navigation message transmitted from the GPS satellite and the position information transmitted from IMES transmitters 20, 30A and 30B are all spread spectrum signals modulated by a pseudo spread code using a pseudo random noise code (PRN code). Therefore, tracking of the signals and decoding of the signals are possible by using a publicly known method of cross correlation process between plural encoding patterns and the received signals (to identify the decoding pattern to be used for modulating each of the spread spectrum signals).

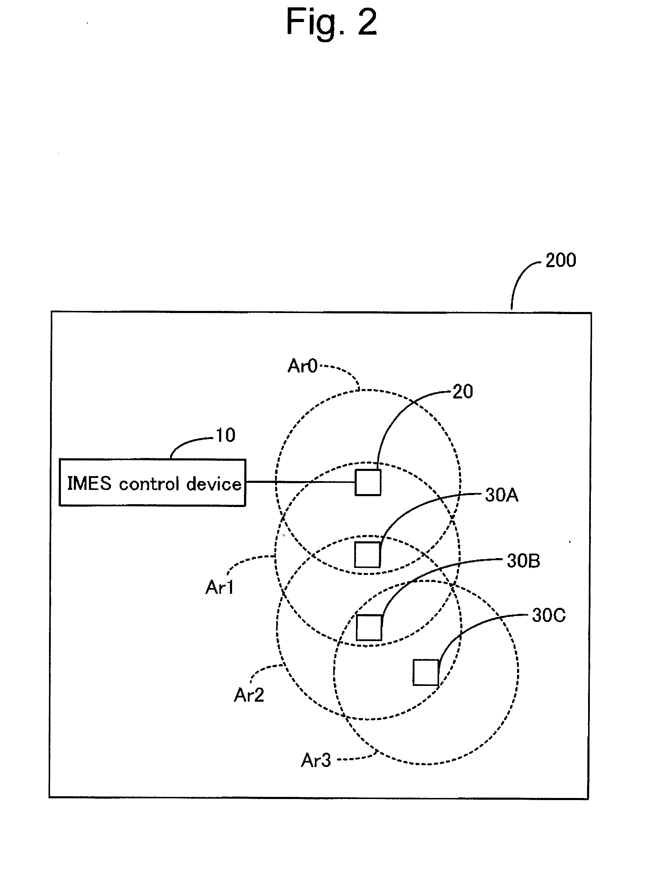

Note that the IMES transmitters 20, 30A and 30B (including 30C and other IMES transmitters in Figs. 2, 3, 4, etc.) are corresponding to the position information transmission device, the IMES transmitter 20 is corresponding to the first position information transmission device, the IMES transmitters 30A and 30B (including 30C and other IMES transmitters in Figs. 2, 3, 4, etc.) are corresponding to the second position information transmission device, the IMES or the positioning system 100 is corresponding to the position information transmission system, and an IMES control device 10 is corresponding to the control device or the position information control device in the present embodiment.

Fig. 2 is a configuration diagram showing an example of the IMES 200 formed in the positioning system 100. As shown in the figure, the IMES 200 has an IMES control device 10 and plural IMES transmitters 20, 30A, 30B, 30C, ---. The IMES transmitters 20, 30A, 30B, 30C, --- are placed in an area of the IMES 200 and transmit the position information that is converted to the above described spread spectrum signal within a predetermined ambient areas (transmitting areas Ar0, Ar1, Ar2 and Ar3).

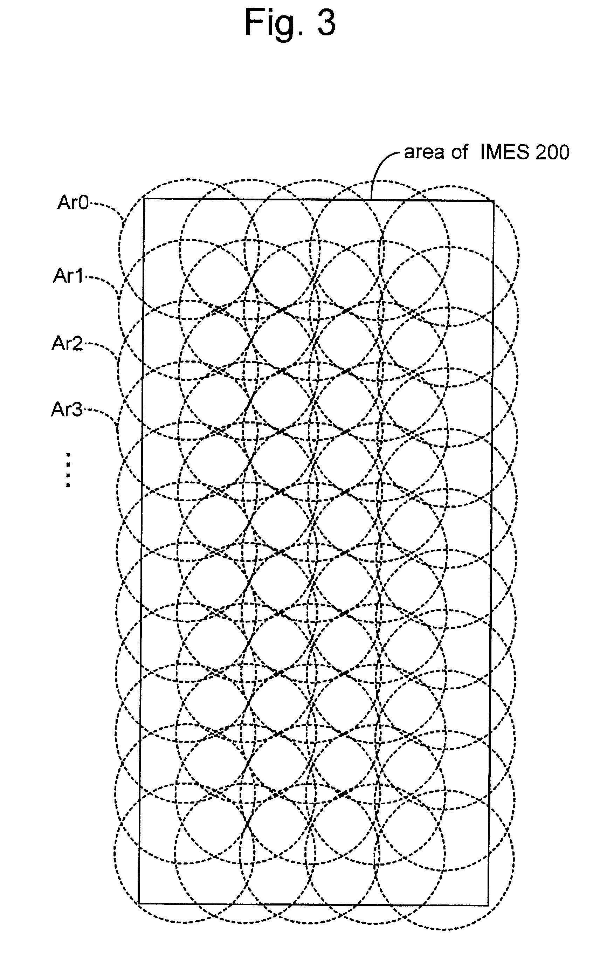

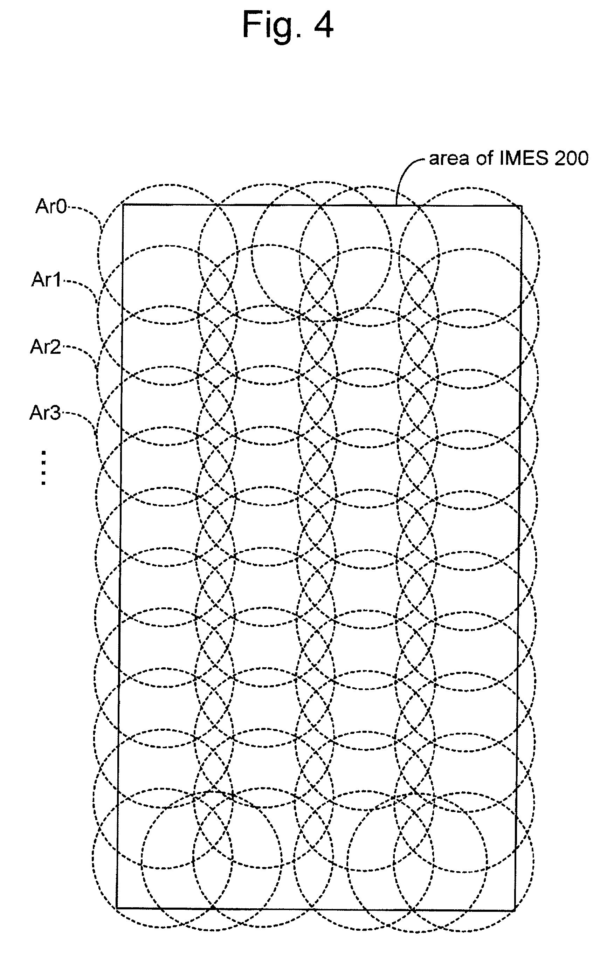

In general, the IMES 200 is established in an area where the navigation message transmitted from the GPS satellite is difficult to arrive such as inside a building. Of course, the area is not limited to the inside a building. A similar IMES can be formed in a predetermined area of outside building, or formed between the inside and outside of a building. Figs. 3 and 4 are schematic diagrams showing alignment examples of the IMES transmitters 20, 30A, 30B, 30C, --- of the IMES 200. Although the IMES 200 is shown as a closed area in the figures, but, of course, the IMES 200 can be established by combining plural closed areas.

As shown in Fig. 3 and Fig. 4, plural IMES transmitters are placed to cover whole area of the IMES 200 by combining plural transmitting areas formed by the IMES transmitters. For example, in Fig. 3 and Fig. 4, each of the IMES transmitters 20, 30A, 30B, 30C --- forms different transmitting areas Ar0, Ar1, Ar2, Ar3 ---, and whole area of the IMES 200 is covered by the transmitting areas Ar0, Ar1, Ar2, Ar3 ---. Therefore, the mobile terminal 50 in the area of the IMES 200 can receive the position information transmitted from one of the IMES transmitters.

Also, in the example shown in Fig. 3, two of adjacent IMES transmitters are placed to be included in the transmitting area formed by each other. For example, the IMES transmitter 30A is placed to be included in the transmitting area Ar1 formed by the IMES transmitter 20. On the other hand, the IMES transmitter 20 is placed to be included in the transmitting area Ar0 formed by the IMES transmitter 30A.

Also, in the example shown in Fig. 4, two of vertically adjacent IMES transmitters are placed to be included in the transmitting area formed by each other, while two of horizontally adjacent IMES transmitters are placed not to be included in the transmitting area formed by each other, in principle. However, in at least one of the vertically aligned plural IMES transmitters, the IMES transmitter is placed to include both left and right adjacent IMES transmitters in its transmitting area. By using the alignment above, whole the IMES 200 can be covered by fewer IMES transmitters than Fig. 3. Of course, Fig. 3 and Fig.4 are examples. Needless to say, these examples can be combined arbitrarily, vertical direction and horizontal direction can be switched arbitrarily as for adjacent relationship, the IMES transmitters can be diagonally adjacent to one another, and various alignments are available.

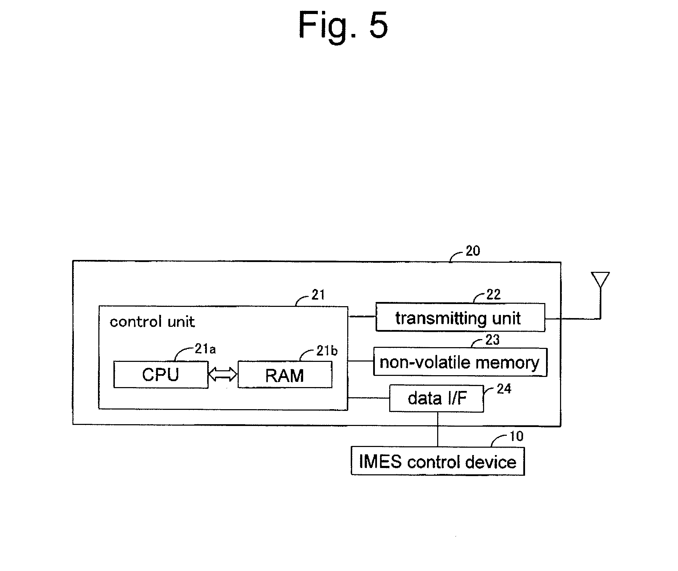

By using an IMES area formed as explained above, in the IMES 200, various data can be transmitted from the IMES control device 10 to all of the plural IMES transmitters.
Here, a configuration of the IMES transmitter will be explained with reference to Fig. 5. Note that different configurations are used between the IMES transmitter 20 and the IMES transmitters 30A, 30B, 30C --- in the present embodiment.

Fig. 5 is a block diagram showing a configuration of the IMES transmitter 20. As shown in the figure, the IMES transmitter 20 can communicate with the IMES control device 10 by a predetermined communication method, and has a control unit 21, transmitting unit 22, a non-volatile memory 23 and a data IF (Interface) 24. Note that the non-volatile memory 23 is corresponding to the recording unit, the data I/F 24 is corresponding to the communication interface or the transmission device side communication interface in the present embodiment. The data I/F 24 can be anything if it can communicate with the IMES control device 10 regardless of wired or wireless. For example, the data I/F complied with various standards such as wired LAN, Bluetooth (registered trademark) or wireless LAN can be used.

The control unit 21 has a program execution environment that is comprised of a CPU 21a and a RAM 21b, and controls each part of the IMES transmitter 20 by executing a program code stored in the non-volatile memory 23. The control here means, for example, to control the data IF 24 for enabling data communication with the IMES control device 10, to read/write data from/on the non-volatile memory 23, to control the transmitting unit 22 to transmit positional signals or later described registration data Dset, and so on. Note that the control unit 21 can also be formed by a circuit such as an IC chip if it can execute various controls described in the present embodiment.

The program code executed by the control unit 21 includes an encoding pattern that is corresponding to an ID (e.g. PRN-ID) of a pseudo spread code. In other words, by executing the program code, the control unit 21 can execute encoding using the encoding pattern. In addition, when the IMES transmitter 20 has a receiving unit as described later in the variation example, an encoded message can be decoded using the encoding pattern. Note that, when the IMES transmitter 20 has an encoding pattern generator, the encoding pattern should not necessarily be included in the program code because encoding and decoding can be executed using the encoding pattern provided from the encoding pattern generator. Various publicly known encoding pattern generators can be used. For example, the encoding pattern generator realized by combining two feedback shift registers can be used.

The data I/F 24 receives data input from the IMES control device 10 and outputs the data to the control unit 21. The data input from the IMES control device 10 can be position information, a name of the transmitter, an ID of a pseudo spread code, and other data to be recorded in the IMES transmitters.

The registration data Dset whose address is the IMES transmitter 20 is input from the IMES control device 10 to the control unit 21 via the data I/F 24. As for a format of the registration data Dset, unique information of the IMES transmitter (e.g. later described transmitter number) can be specified as an address, and the position information, the name of the transmitter, the ID of the pseudo spread code, and other data to be recorded in the IMES transmitters can be specified as a payload, for example. When the registration data Dset is input to the control unit 21, the control unit 21 stores information included in the registration data Dset in a preliminarily determined area of the non-volatile memory 23. After the control unit 21 updates the information recorded in each area of the non-volatile memory 23, the control unit 21 outputs a positioning signal or the like based on the updated data to the transmitting unit 22.

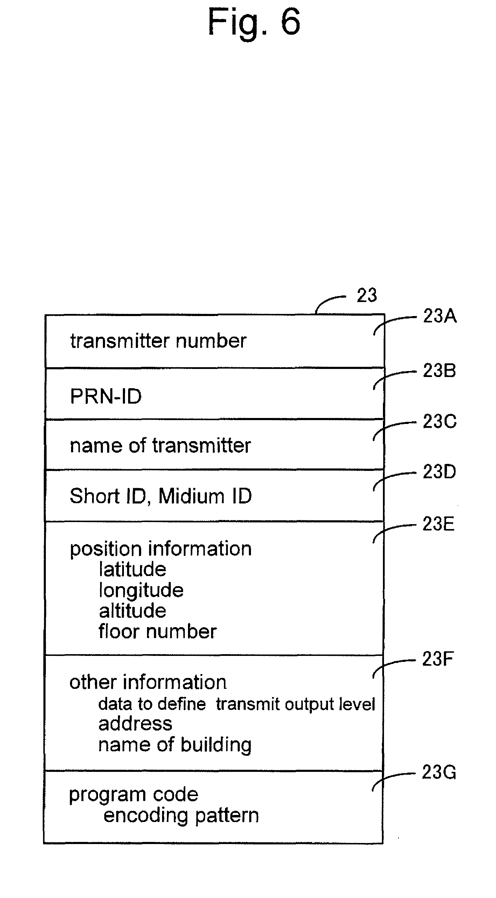

Fig. 6 is a schematic diagram showing a data structure of the non-volatile memory 23. The non-volatile memory 23 has areas 23A to 23G to store data.
In the area 23A, a transmitter number, which is used as a number for identifying the transmitter, is stored. A manufacturing number, which is recorded in the non-volatile memory of the transmitter when manufacturing the transmitter, can be used as the transmitter number. Of course, other unique information for each of the transmitters can be used, and information (e.g. hash value) generated by converting the other unique information with a predetermined method can be used. Note that the transmitter number or the like is corresponding to the identification information in the present embodiment.
In the area 23B, the ID (PRN-ID) of the pseudo spread code, which is assigned to the IMES transmitter, is stored.
In the area 23C, the name of the IMES transmitter is stored as a text data or the like.
In the area 23D, Short ID and Medium ID of the IMES standard are stored. The Short ID and the Medium ID are uniquely assigned to each IMES transmitter. In the IMES standard, they are defined as information that is uniquely operable in each IMES 200. In other words, the area 23D is an area to store unique information that is assigned to each of the IMES transmitters according to a unique operation of each IMES 200.
In the area 23E, position information to identify an installation position of the corresponding IMES transmitter is stored. For example, the position information can be provided by arbitrarily combining latitude, longitude, altitude and floor number.
In the area 23F, information used for wireless communication except the position information is stored. For example, data to define a transmit output level, an address, a name of the building, or the like can be stored.
In the area 23G, the program code to be executed by the control unit 21 is stored. As described above, the program code includes the encoding pattern that is corresponding to the ID (e.g. PRN-ID) of the pseudo spread code.

When the registration data Dset whose address is another IMES transmitter other than the corresponding IMES transmitter 20 is input from the IMES control device 10 to the control unit 21 via the data I/F 24, the control unit 21 outputs the registration data Dset to the transmitting unit 22. At that time, the control unit 21 outputs the registration data Dset to the transmitting unit 22 as a bit stream of the spread spectrum signal. The spread spectrum signal is data whose spectrum is spread by using the encoding pattern corresponding to the ID of the pseudo spread code recorded in the non-volatile memory 23.

The transmitting unit 22 generates a transmission signal in which a carrier wave of a predetermined frequency is modulated using the bit stream input from the control unit 21, and then transmits the transmission signal by wireless via an antenna. Note that, without limited to the bit stream based on the registration data Dset, the control unit 21 can control the transmitting unit 22 to transmit the bit stream of the positional signal or the like generated based on the position information to be transmitted to the mobile terminal 50 or based on the ID of the pseudo spread code. The bit stream of the positional signal or the like is received by the mobile terminal 50 to be used as the above described position information.

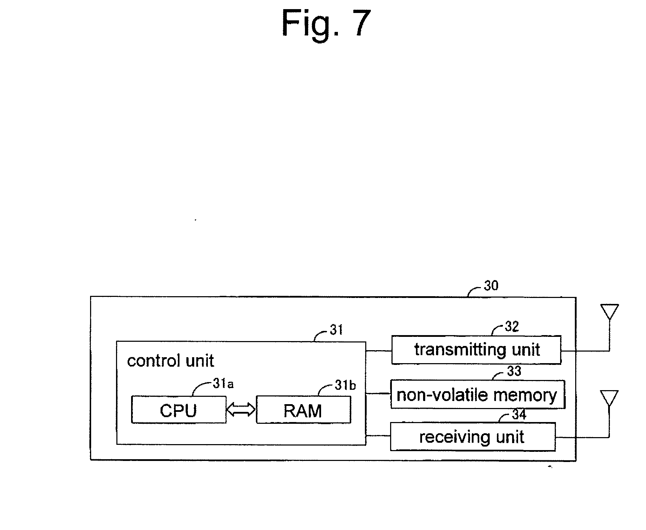

Fig. 7 is a block diagram showing a configuration of IMES transmitters 30A, 30B, 30C --- (hereafter collectively referred to as IMES transmitter 30). The IMES transmitter 30 can receive the spread spectrum signal transmitted by other IMES transmitters. As shown in the figure, the IMES transmitter 30 has a control unit 31, a transmitting unit 32, a non-volatile memory 33, and a receiving unit 34. Note that the non-volatile memory 33 is corresponding to the recording unit in the present embodiment.

The control unit 31 has a program execution environment that is comprised of a CPU 31a and a RAM 31b, and controls each part of the IMES transmitter 30 by executing a program code stored in the non-volatile memory 33. The control here means, for example, to read/write data from/on the non-volatile memory 33, to control the transmitting unit 32 to transmit the positional signal and the later described registration data Dset, to acquire the later described registration data Dset via the receiving unit 34, and so on. Note that the control unit 31 can be formed by a circuit such as an IC chip if it can execute various controls that are described in the present embodiment.

The program code executed by the control unit 31 includes an encoding pattern that is corresponding to an ID (e.g. PRN-ID) of the pseudo spread code. In other words, by executing the program code, the control unit 31 can execute encoding using the encoding pattern or execute decoding when an encoded message is received via the receiving unit 34. Note that, when the IMES transmitter 30 has an encoding pattern generator, the encoding pattern should not necessarily be included in the program code. Various publicly known encoding pattern generators can be used.

The receiving unit 34 receives the transmission signal transmitted from other IMES transmitters via an antenna, and then regenerates the bit stream of the spread spectrum signal by demodulating the carrier wave. The control unit 31 acquires original data by decoding the spread spectrum signal using the decoding pattern recorded in the non-volatile memory 33. The spread spectrum signal is decoded by using the above described cross correlation process. As explained above, the function of the receiving unit 34 to receive the transmission signal and the function of the control unit 31 to decode the spread spectrum signal are same as the functions of the mobile terminal 50 to receive and decode the spread spectrum signal transmitted from the GPS satellite or the IMES transmitter. Therefore, these functions can be realized by using the same structure and function to be mounted on the mobile terminal 50.

When the spread spectrum signal acquired via the receiving unit 34 includes the registration data Dset whose address is the IMES transmitter 30, the control unit 31 stores information included in the registration data Dset in a preliminarily determined area of the non-volatile memory 33. After the control unit 31 updates the information recorded in each area of the non-volatile memory 33, the control unit 31 outputs the positioning signal or the like based on the updated data to the transmitting unit 32.

The information recorded in the non-volatile memory 33 is same as the information recorded in the above described non-volatile memory 23. In addition, plural encoding patterns of the pseudo spread code to decode the spread spectrum signal are recorded in the non-volatile memory 33. However, the plural encoding patterns should not necessarily be recorded if the IMES transmitter 30 has the above described publicly known encoding pattern generator because the decoding can be executed with arbitrarily generating the encoding pattern by the encoding pattern generator. Note that different ID of the pseudo spread code is assigned to non-volatile memories 23, 33 of each of the IMES transmitters (IMES transmitter 20, IMES transmitters 30A, 30B, 30C ---).

When the registration data Dset whose address is another IMES transmitter other than the corresponding IMES transmitter 30 is included in the spread spectrum signal acquired via the receiving unit 34, the control unit 31 outputs the registration data Dset to the transmitting unit 32. At that time, the control unit 31 outputs the registration data Dset to the transmitting unit 32 as a bit stream of the spread spectrum signal. The spread spectrum signal is data whose spectrum is spread by using the encoding pattern corresponding to the ID of the pseudo spread code recorded in the non-volatile memory 33.

The transmitting unit 32 generates a transmission signal in which a carrier wave of a predetermined frequency is modulated using the bit stream input from the control unit 31, and then transmits the transmission signal by wireless via an antenna. Note that, without limited to the bit streams based on the registration data Dset, the transmitting unit 31 can control the transmitting unit 32 to transmit the bit stream of the positional signal or the like generated based on the position information to be transmitted to the mobile terminal 50 or based on the ID of the pseudo spread code. The bit stream of the positional signal or the like is received by the mobile terminal 50 to be used as the above described position information.

Note that the above explained IMES transmitters have an internal power source or are supplied power from an external power via an AC adapter or the like.

Then, the IMES control device 10 will be explained. The IMES control device 10 has a control computer 11 and a database (DB) 12. The IMES control device 10 has a control unit 11a that controls whole the control computer 11, a data I/F 11b that can communicate with the data I/F 24 of the IMES transmitter 20, and an operation unit 11c that receives various operation inputs. Note that the data IF 11b is corresponding to the control device side communication interface in the present embodiment.

In the DB 12, the transmitter number of each of the IMES transmitters is recorded associated with the position information of each of the IMES transmitters, the ID of the pseudo spread code assigned to each of the transmitters, the name of each of the transmitters, and other data to be recorded in each of the IMES transmitters. The control computer 11 can execute various operations such as reading, setting or changing of the data recorded in the DB 12 by operating the operation unit 11c. Of course, the various operations such as reading, setting or changing of the data recorded in the DB 12 may be executed from an external computer connected to the IMES control device 10 via a network (not illustrated) or the like.

If the data in the DB 12 is changed using various methods as described above, the data registered in the IMES transmitters should be changed. Therefore, in the present embodiment, when the data in the DB 12 is changed as explained above, it is regarded as a triggering event, and the later described process for registering is executed. More specifically, the triggering event can be a registration of new data to the DB 12, a change of the data registered in the DB 12, an operation input from the control computer 11 instructing to set or change the data recorded in the DB 12, a command input to the control computer instructing to set or change the IMES data, or the like. Of course, the triggering event is not limited to them. Various events can be adopted if the event indicates to register or change information to any of the IMES transmitters.

### (2) Process for registering data:

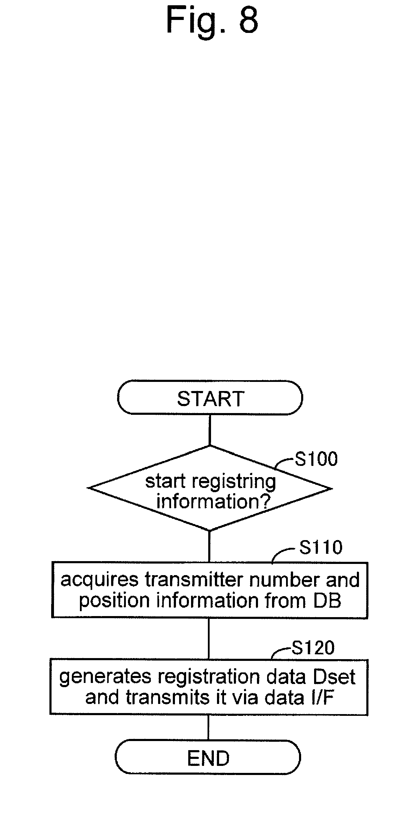

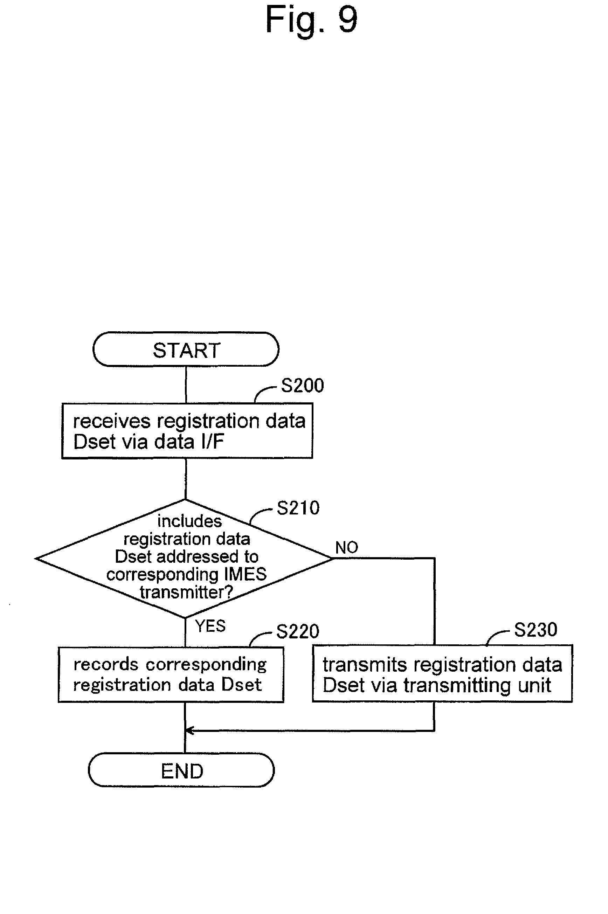

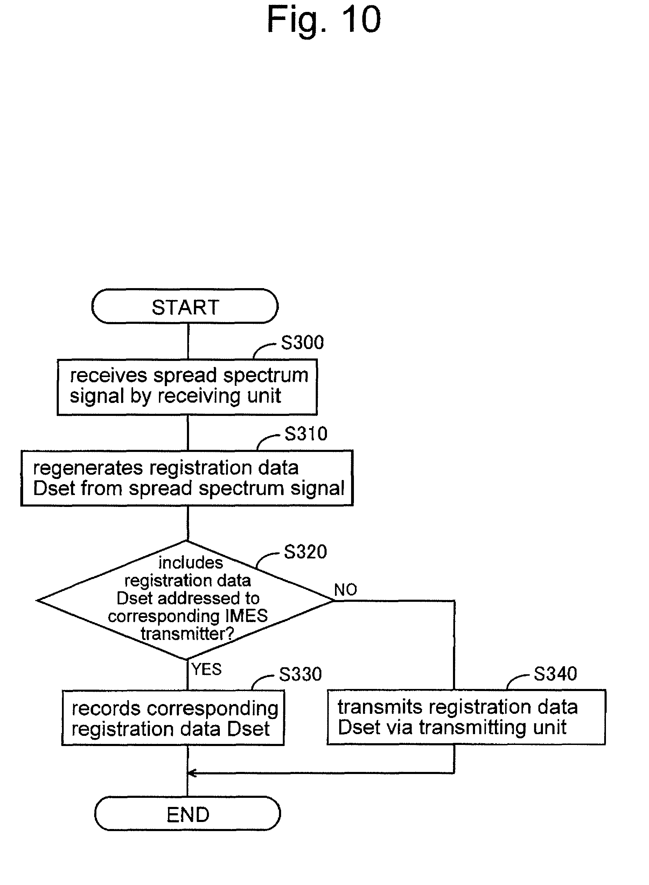

Fig. 8 is a flow chart of a process for registering the position information on the control computer 11. Fig. 9 is a flow chart of a process for registering the position information on the IMES transmitter 20. Fig. 10 is a flow chart of a process for registering the position information on the IMES transmitter 30.

At first, if the triggering event described above happens, the control computer 11 detects that and then starts a registering process for setting or changing data to the IMES transmitters (S 100). Note that the following example is explained by using an example when the position information is newly registered to the IMES transmitters. However, other data can be registered to the IMES transmitters by using the same method. In addition, without limited to new registration, the already registered information can be changed.

Once the process for registering is started, the control computer 11, at first, acquires the transmitter number of the IMES transmitter to which settings are to be made and the position information from the database (S110). Then, the control computer 11 generates the registration data Dset on which the transmitter number of the IMES transmitter is written as an address and the position information is written as a payload, and then transmits the registration data Dset to the data IF 24 of the IMES transmitter 20 via the data I/F 11b (S 120). After that, the control computer 11 finishes the process for registering.

Next, the control unit 21 of the IMES transmitter 20 acquires the registration data Dset when it is transmitted via the data I/F 24 (S200), then judges whether or not the data is addressed to the IMES transmitter 20 by comparing the transmitter number written in the address with its own transmission number recorded in the non-volatile memory 23 (S210).

Here, if the address of the registration data Dset is the IMES transmitter 20 (S210: Yes), the control unit 21 acquires the position information written in the payload and then records it in the area 23E of the non-volatile memory 23 (S220). At that time, if the position information has already recorded in the area 23E of the non-volatile memory 23, the recorded information is overwritten and deleted. If the registration of the position information is finished, the IMES transmitter 20 finishes the process of setting. By the process described above, the position information can be assigned to the IMES transmitter 20.

On the other hand, if the address of the registration data Dset is other than the IMES transmitter 20 (S210: No), the control unit 21 controls the transmitting unit 22 to transmit the registration data Dset (S230). The control unit 21 converts the registration data to the spread spectrum signal by using the encoding pattern corresponding to the ID of the pseudo spread code recorded in the non-volatile memory 23, and then outputs the spread spectrum signal as a data bit stream to the transmitting unit 22. Then, the transmitting unit 22 converts a carrier wave to a transmit frequency and then transmits it via an antenna. At that time, in the alignment examples of Fig. 3 or Fig. 4, for example, the IMES transmitter 30A exists in the transmitting area Ar0 of the IMES transmitter 20.

If the IMES transmitter 30A receives the signal transmitted from the IMES transmitter 20, the receiving unit 34 regenerates the bit stream by demodulating the signal (S300). Next, the control unit 31 regenerates the registration data Dset by decoding the spread spectrum signal included in the demodulated data bit stream (S310). Note that if the regenerated data is other than the registration data Dset, the regenerated data is deleted and the following processes will not be executed.

If the control unit 31 receives the registration data Dset, the control unit 31 judges whether or not the data is addressed to the IMES transmitter 30A by comparing the transmitter number written in the address with its own transmission number recorded in the non-volatile memory 33 (S320). If the address of the registration data Dset is the IMES transmitter 30A (S320: Yes), the control unit 31 acquires the position information written in the payload and then records it in the area 33E (not illustrated) of the non-volatile memory 33 (S330). At that time, if the position information has already recorded in the area 33E, the recorded information is overwritten and deleted. After the registration of the position information is finished, the IMES transmitter 30A finishes the process of setting.

On the other hand, if the address of the registration data Dset is other than the IMES transmitter 30A (S320: No), the control unit 31 controls the transmitting unit 32 to transmit the registration data Dset. The control unit 31 converts the registration data to the spread spectrum signal by using the encoding pattern corresponding to the ID of the pseudo spread code recorded in the non-volatile memory 33, and then outputs the spread spectrum signal as a data bit stream to the transmitting unit 32. Then, the transmitting unit 32 converts the carrier wave to a transmit frequency and then transmits it via an antenna (S340). At that time, in the alignment example of Fig. 4, for example, the IMES transmitters 20 and 30B exist in the transmitting area Ar1 of the IMES transmitter 30A. However, in the alignment example of Fig. 4, only the IMES transmitter 30B receives the spread spectrum signal transmitted from the IMES transmitter 30A because a receiving unit is not provided on the IMES transmitter 20.

By the way, if the registration data Dset is transmitted to the neighbored IMES transmitters using a bucket relay method as described above, an endless loop may be formed because the registration data Dset relayed by an IMES transmitter can be received by the same IMES transmitter again. For example, in the alignment example of Fig. 4, the spread spectrum signal can be transmitted from the IMES transmitter 30A to the IMES transmitter 30B, and then the spread spectrum signal transmitted from the IMES transmitter 30B can be received by the IMES transmitter 30A again. Therefore, in the present embodiment, it is preferred not to transmit the same registration data Dset more than once in succession.

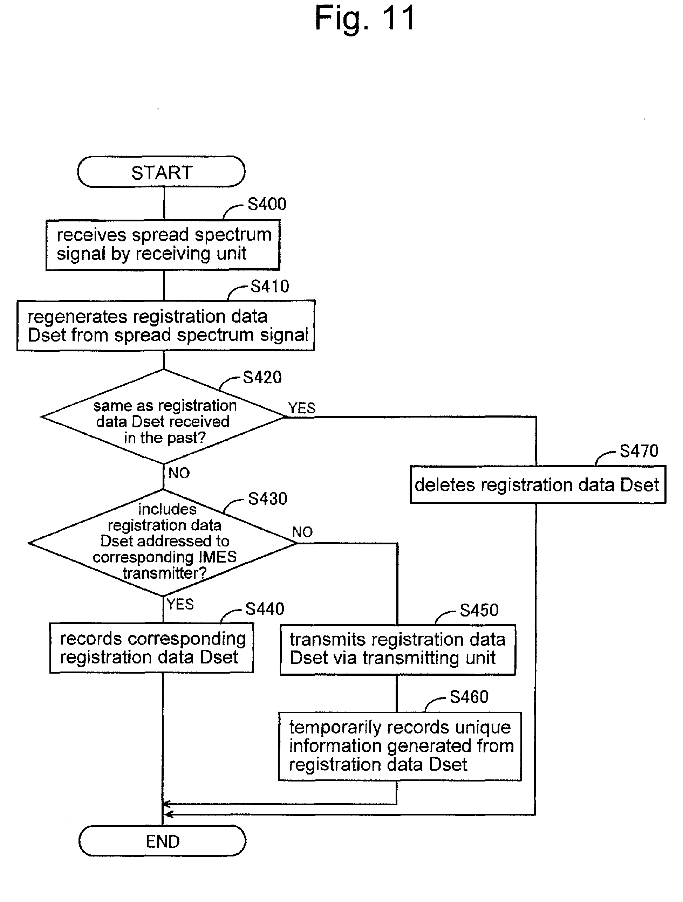

Fig. 11 is a flow chart of a process for registering the position information on the IMES transmitter 30 wherein the number of transmissions of the registration data Dset is limited. Here, the IMES transmitter 30A is used as an example for explanation. As shown in the figure, the IMES transmitter 30A receives the signal transmitted from the IMES transmitter 20 by the receiving unit 34, and then regenerates the bit stream by demodulating the signal (S400). Then, the control unit 31 regenerates the registration data Dset by decoding the spread spectrum signal included in the demodulated data bit stream (S410). Note that if the regenerated data is other than the registration data Dset, the regenerated data is deleted and the following processes will not be executed.

Here, the control unit 31 judges whether or not the registration data Dset acquired in the process of the steps S400 and S410 is same as the registration data received in the past (S420). Specifically, the control unit 31 generates unique information from the registration data Dset acquired in the step S410, and then compares the unique information with the unique information that is temporarily recorded in the predetermined area of the RAM 31a (S420). In the predetermined area of the RAM 31a, as described in the later described step S460, the unique information concerning the recently received registration data Dset is temporarily recorded. The unique information can be the registration data Dset itself, a check sum generated from the registration data Dset, a hash value generated from the registration data Dset, or the like.

If the unique information generated in the step S420 corresponds with the unique information temporarily recorded in the predetermined area of the RAM 31a (S420: Yes), the control unit 31 deletes the received registration data Dset (S470), and the process of the steps S430 to S460 will not be executed. On the other hand, if the unique information generated in the step S420 does not correspond with the unique information temporarily recorded in the predetermined area of the RAM 31a (S420: No), go to the step S430 to execute the process of the steps S430 to S460 as for the received registration data Dset. As explained above, by using the process for registering position information shown in Fig. 11, the registration data can be relayed efficiently in the IMES 200.

After that, the control unit 31 judges whether or not the registration data Dset is data addressed to the IMES transmitter 30A (S430). If the address of the registration data Dset is the IMES transmitter 30A (S430: Yes), the control unit 31 acquires the position information written in the payload and then records it in the area 33E (not illustrated) of the non-volatile memory 33 (S440). If the address of the registration data Dset is other than the IMES transmitter 30A (S430: No), the control unit 31 controls the transmitting unit 32 to transmit the registration data Dset (S450). The explanation about the process of the steps S430 to S450 is omitted here because the process is same as the process of the steps S320 to S340 in Fig. 10.

At the same time when the registration data Dset is transmitted in the step S450, the control unit 31 temporarily records the unique information generated from the transmitted registration data Dset on the predetermined area of the RAM 31b and then finishes the process for registering (S460). Here, the unique information temporarily recorded in the RAM 31b is held until another unique information is overwritten.
In other words, the unique information is held until the subsequently received registration data Dset is transmitted from the transmitting unit 32. Therefore, when the same registration data Dset is received in succession, the same registration data Dset is prevented to be redundantly transmitted more than once by using the process of judgment in the step S420.

Note that the control unit 31 can be specified to hold the unique information recorded in the predetermined area of the RAM 31b in the step S460 of Fig. 11 for a predetermined time period. By using the above configuration, a single unique information is recorded when only one kind of registration data Dset is received in the predetermined time period, while plural unique information is recorded when plural kinds of different registration data Dset are received in the predetermined time period (S460). The predetermined time period can be time enough to finish relaying the registration data Dset in all of the IMES transmitters that compose the IMES 200, for example.
At that time, in the process for judging in the step S420, the unique information is generated from the registration data Dset acquired in the step S410. If the unique information corresponds with one of the unique information temporarily recorded in the predetermined area of the RAM 31a (S420: Yes), the control unit 31 deletes the received registration data Dset (S470), and the process of the steps S430 to S460 will not be executed. If the unique information does not correspond with any of the unique information temporarily recorded in the predetermined area of the RAM 31a (S420: No), go to the step S430.
As explained above, if the unique information recorded in the predetermined area of the RAM 31b is held for the predetermined time period, the same registration data Dset is prevented to be redundantly transmitted more than once when the same registration data Dset is received more than once in the predetermined time period by using the process for judging in the step S420.

In addition, information amount transmittable from the control computer 11 to the IMES transmitter 20 at a time may be limited. Therefore, to enable to transmit the registration data Dset exceeding a size limitation, a separate transmission function can be provided on the control computer 11 and a separate receiving function can be provided on the IMES transmitter 20. For example, the separate receiving function of the IMES transmitter 20 is provided on the data I/F 24 and the data I/F 24 is achieved by a counting function to count the number of separation. Of course, the separate receiving function can be provided on the control unit 21.

When using the separate transmission, the control computer 11 judges the size of the registration data Dset in the step S120. Then, if the registration data Dset exceeds a predetermined size, the number of separation is notified to the IMES transmitter 20, and then separate data is transmitted to the IMES transmitter 20 sequentially. In the IMES transmitter 20, the data I/F 24 holds the notified number of separation, increments a counter each time the separate data transmitted sequentially is received, and continues to receive the separate data until the counter of the number of separation reaches the number of separation. Then, an original data is restored by combining each of the separate data, and then the data is output to the control unit 21. By using the separate transmission and the separate receiving explained above, the limitation of data size transmitted from the control computer 11 to the IMES transmitter 20 can be avoided. Note that the data I/F 24, the control unit 21, or the like to execute the separate receiving is corresponding to the separate receiving means in the present embodiment.

Similarly, information amount transmittable at a time may be limited when the IMES transmitter 20 transmits the data to the IMES transmitter 30, when IMES transmitter 30 transmits the data to another IMES transmitter 30, or when the IMES transmitter 30 transmits the data to the IMES transmitter 20 if the IMES transmitter 20 has a receiving unit. Therefore, the separate transmission function can be provided on the IMES transmitters 20 and 30 enabling to transmit the registration data Dset exceeding a size limitation, and the counting function can be provided on the IMES transmitters 20 and 30 to count the number of the separation enabling to receive the registration data separately. Note that the function above can be achieved by the receiving unit of the IMES transmitters 20 and 30 or achieved by the control unit.

The separate transmission and receiving executed between the IMES transmitters will be explained using an example of the process of Figs 9 and 10. When using the separate transmission, the IMES transmitter 20 of the transmitting side judges the size of the registration data Dset in the step S230. Then, if the registration data Dset exceeds a predetermined size, the number of separation is notified to the IMES transmitter 30. Then, the separate data is transmitted to the IMES transmitter 30 sequentially. The IMES transmitter 30 holds the notified number of separation.
Then, the IMES transmitter 30 increments a counter of the number of separation each time the separate data transmitted sequentially is received, and continues to receive the separate data until the counter of the number of separation reaches the number of separation. Then, a restored original data is acquired by the control unit 31 by combining each of the separate data.

By using the separate transmission explained above, the limitation of data size transmitted between the IMES transmitters can be avoided. As explained above, the control unit or the transmitting unit in each of the IMES transmitters to execute the separate transmission is corresponding to the separate transmission means, and the control unit or the receiving unit in each of the IMES transmitters to execute the separate receiving is corresponding to the separate receiving means. Note that the method to transmit or receive the separate data explained in the present embodiment is an example. Needless to say, the separate data can be transmitted or received by using other publicly known methods.

### (3) General overview and variation examples:

As explained above, the IMES transmitter 20 has the control unit 21, the non-volatile memory 23 to record the transmitter number of the IMES transmitter 20, the position information and the ID of the pseudo spread code, and the data I/F 24. When the registration data Dset associating the transmitter number with the position information is input from the data I/F 24, the control unit 21 records the position information included in the registration data Dset on the non-volatile memory 23 if the registration data Dset includes the transmitter number of the IMES transmitter 20, while the control unit 21 controls the transmitting unit 22 to transmit the registration data Dset if the registration data Dset includes the transmitter number of other than the IMES transmitter 20. In other words, among the registration data Dset input from the data I/F 24, the position information addressed to the IMES transmitter 20 is assigned to the IMES transmitter 20 itself, while the position information addressed to another IMES transmitter is transmitted as the spread spectrum signal. Therefore, the registration data Dset can be relayed to the IMES transmitter 30 having the receiving unit 34.

On the other hand, the IMES transmitter 30 has the control unit 31, the non-volatile memory 33 to record the transmitter number of the IMES transmitter 30, the position information and the ID of the pseudo spread code, and the receiving unit 34 to receive the spread spectrum signal transmitted by wireless. When the registration data Dset associating the transmitter number with the position information is included in the spread spectrum signal received by the receiving unit 34, the control unit 31 records the position information associated with the transmitter number on the non-volatile memory 33 if the registration data Dset includes the transmitter number of the IMES transmitter 30, while the control unit 31 controls the transmitting unit 32 to transmit the registration data Dset by wireless if the registration data Dset includes the transmitter number of other than the IMES transmitter 30. In other words, the registration data Dset relayed from the IMES transmitter 20 can be received and the position information can be assigned based on the registration data Dset. In addition, if the registration data relayed is not addressed to itself, the registration data can be further relayed to other IMES transmitters.

### (3-1) Variation example 1:

Note that the receiving unit is not provided on the IMES transmitter 20 and the data IF is not provided on the IMES transmitter 30 in the above described embodiment, but, of course, the receiving unit can be provided on the IMES transmitter 20. In such a case, the configuration of hardware and software can be unified between the IMES transmitters 20 and 30 although they are differently used in the IMES 200.

Even when the receiving unit is provided on the IMES transmitter 20, the IMES control device 10 can monitor states of the IMES transmitters 30A, 30B, 30C --- via the IMES transmitter 20. For example, if a self check or the like is executed in the IMES transmitter 30A and a check result is transmitted from the transmitting unit, the IMES transmitter 20 can receive the check result by the receiving unit. The address to send the check result can be arbitrarily changed according to a design of each system. An address for transmitting error information can be prepared to control the IMES transmitter 20 to transmit the error information to the IMES control device 10 via the data I/F 24 when the IMES transmitter 20 receives the error information transmitted to the address. A flag indicating the error information can be also used. Of course, the information transmitted from each of the IMES transmitters is not limited to the check result. Status information of each IMES transmitter, information about other malfunctions or various information can be transmitted. Needless to say, the IMES transmitter 20 also can transmit the same information to the IMES control device 10 via the data I/F 24. In any case, performance for monitoring each of the IMES transmitters is improved.

### (3-2) Variation example 2:

Also, plural IMES transmitters 20 can be placed in one IMES 200. In other words, plural IMES transmitters are connected to the control computer 11. In such a case, setting and updating the data of whole the IMES 200 can be finished more quickly because the relay of the registration data Dset is started from more than one place. Of course, an effect of reducing time increases if plural IMES transmitters are placed apart from each other in the IMES 200.

### (3-3) Variation example 3:

Also, although the above described embodiment is explained on the basis that the position information included in the registration data Dset transmitted from the control computer 11 to the IMES transmitter 20 is one, but the registration data Dset can be configured to include plural sets of addresses and position information, of course. In such a case, the IMES transmitter 20 can simultaneously transmit the plural sets of the addresses and position information included in the registration data Dset from the transmitting unit 22, or can sequentially transmit each set of the address and the position information. When plural sets of addresses and position information are transmitted simultaneously, after the IMES transmitter 20 receives the registration data Dset, the IMES transmitter 20 judges each of the addresses, acquires the position information addressed to its own transmitter number, stores the position information in the predetermined area of the non-volatile memory 23, and then executes relay transmission from the transmitting unit 22. Of course, when the IMES transmitter 30 receives the same registration data Dset via the receiving unit 34, the IMES transmitter 30 executes same judgment, storage, relay transmission or other processes and actions as the IMES transmitter 20.

### (3-3) Variation example 4:

Also, although the above described embodiment is explained on the basis that the information associated with the address included in the registration data Dset transmitted from the control computer 11 to the IMES transmitter 20 is one, but plural information can be associated with one address included in the registration data Dset (For example, both the position information and the ID of the pseudo spread code can be associated with one address.) If the IMES transmitter 20 receives such a registration data Dset, the IMES transmitter 20 operates as follows.
At first, when the received registration data Dset includes only one address that is associated with the plural kinds of information, and if the address of the registration data Dset is its own transmitter number, the IMES transmitter 20 acquires the plural kinds of information associated with the address, stores the respective information in the corresponding area of the non-volatile memory 23, and the relay transmission of the registration data Dset is not executed. On the other hand, if the address of the registration data Dset is not its own transmitter number, the relay transmission of the registration data Dset is executed from the transmitting unit 22 to other IMES transmitters.

Next, when the received registration data Dset includes plural addresses that are associated with the plural kinds of information, and if the addresses of the registration data Dset includes its own transmitter number, the IMES transmitter 20 acquires the plural kinds of information associated with its own address, stores the respective information in the corresponding area of the non-volatile memory 23, and then the relay transmission of the registration data Dset is executed. On the other hand, if its own transmitter number is not included in the addresses of the registration data Dset, the information are not acquired and stored, and the relay transmission of the registration data Dset is executed from the transmitting unit 22 to other IMES transmitters.

Of course, when the IMES transmitter 30 receives the same registration data Dset via the receiving unit 34, the IMES transmitter 30 executes same judgment, storage, relay transmission or other processes and actions as the IMES transmitter 20.

Note that, this invention is not limited to the above-mentioned embodiments. Although it is to those skilled in the art, the following are disclosed as the one embodiment of this invention.
- Mutually substitutable members, configurations, etc. disclosed in the embodiment can be used with their combination altered appropriately.
- Although not disclosed in the embodiment, members, configurations, etc. that belong to the known technology and can be substituted with the members, the configurations, etc. disclosed in the embodiment can be appropriately substituted or are used by altering their combination.
- Although not disclosed in the embodiment, members, configurations, etc. that those skilled in the art can consider as substitutions of the members, the configurations, etc. disclosed in the embodiment are substituted with the above mentioned appropriately or are used by altering its combination.

### [Description of the Reference Numerals]

10: IMES control device, 11: control computer, 11a: control unit, 11b: data I/F, 11c: operation unit, 12: database (DB), 20: IMES transmitter, 21: control unit, 21a: CPU, 21b: RAM, 22: transmitting unit, 23: non-volatile memory, 23A to 23E: areas, 24: data I/F, 30: IMES transmitter, 30A to 30C: IMES transmitters, 31: control unit, 32: transmitting unit, 33: non-volatile memory, 34: receiving unit, 50: mobile terminal, 100: positioning system, 200: IMES, Ar0 to Ar3: transmitting areas, Dset: registration data

## Claims

1. A position information transmission device having a transmitting unit to transmit, by wireless, a spread spectrum signal generated based on position information indicating an installation position, the device comprising:
a recording unit that records a unique identification information of the position information transmission device, the position information, and an ID of a pseudo spread code for spreading a spectrum of the position information,
a communication interface for communicating with an external computer, and
a control unit that, when data associating the identification information with the position information is input from the communication interface, controls the recording unit to record the position information associated with the identification information if the data includes the identification information of the position information transmission device, and controls the transmitting unit to transmit the data by wireless if the data includes the identification information of another position information transmission device.

2. The position information transmission device according to claim 1, wherein
when data associating the identification information with the ID of the pseudo spread code is input from the communication interface, the control unit controls the recording unit to record the ID of the pseudo spread code associated with the identification information if the data includes the identification information of the position information transmission device, and controls the transmitting unit to transmit the data by wireless if the data includes the identification information of another position information transmission device.

3. The position information transmission device according to claim 1 or 2, wherein
the recording unit can record a predetermined information uniquely assigned to the position information transmission device, and
when data associating the identification information with the predetermined information is input from the communication interface, the control unit controls the recording unit to record the predetermined information associated with the identification information if the data includes the identification information of the position information transmission device, and controls the transmitting unit to transmit the data by wireless if the data includes the identification information of another position information transmission device.

4. The position information transmission device according to any one of claims 1 to 3, wherein
the recording unit can record a name of the position information transmission device, and
when data associating the identification information with the name is input from the communication interface, the control unit controls the recording unit to record the name associated with the identification information if the data includes the identification information of the position information transmission device, and controls the transmitting unit to transmit the data by wireless if the data includes the identification information of another position information transmission device.

5. The position information transmission device according to any one of claims 1 to 4, the device further comprising:
a separate receiving means that enables to receive the data separately from the external computer when receiving data exceeding a predetermined size.

6. A position information transmission device having a transmitting unit to transmit, by wireless, a spread spectrum signal generated based on position information indicating an installation position, the device comprising:
a recording unit that records a unique identification information of the position information transmission device, the position information, and an ID of a pseudo spread code for spreading a spectrum of the position information,
a receiving unit that receives the spread spectrum signal transmitted by wireless, and
a control unit that, when data associating the identification information with the position information is included in the spread spectrum signal received by the receiving unit, controls the recording unit to record the position information associated with the identification information if the data includes the identification information of the position information transmission device, and controls the transmitting unit to transmit the data by wireless if the data includes the identification information of another position information transmission device.

7. The position information transmission device according to claim 6, wherein
when data associating the identification information with the ID of the pseudo spread code is included in the spread spectrum signal received by the receiving unit, the control unit controls the recording unit to record the ID of the pseudo spread code associated with the identification information if the data includes the identification information of the position information transmission device, and controls the transmitting unit to transmit the data by wireless if the data includes the identification information of another position information transmission device.

8. The position information transmission device according to claim 6 or 7, wherein
the recording unit can record a predetermined information uniquely assigned to the position information transmission device, and
when data associating the identification information with the predetermined information is included in the spread spectrum signal received by the receiving unit, the control unit controls the recording unit to record the predetermined information associated with the identification information if the data includes the identification information of the position information transmission device, and controls the transmitting unit to transmit the data by wireless if the data includes the identification information of another position information transmission device.

9. The position information transmission device according to any one of claims 6 to 8, wherein
the recording unit can record a name of the position information transmission device, and
when the data associating the identification information with the name is included in the spread spectrum signal received by the receiving unit, the control unit controls the recording unit to record the name associated with the identification information if the data includes the identification information of the position information transmission device, and controls the transmitting unit to transmit the data by wireless if the data includes the identification information of another position information transmission device.

10. The position information transmission device according to any one of claims 6 to 9, wherein
when the receiving unit receives the same spread spectrum signal in succession, the control unit does not control the transmitting unit to transmit, by wireless, the data included in the spread spectrum signal received for the second time or later even if the identification information of another position information transmission device is included in the spread spectrum signal.

11. The position information transmission device according to any one of claims 6 to 9, wherein
when the receiving unit receives the same spread spectrum signal more than once in a predetermined time period, the control unit does not control the transmitting unit to transmit, by wireless, the data included in the spread spectrum signal received for the second time or later even if the identification information of another position information transmission device is included in the spread spectrum signal.

12. A position information transmission system, comprising:
a fist position information transmission device that has a first transmitting unit to transmit, by wireless, a spread spectrum signal generated based on position information indicating an installation position,
a second position information transmission device that has a second transmitting unit to transmit, by wireless, the spread spectrum signal generated based on the position information indicating the installation position, and
a control device that controls the positional information of the position information transmission devices, wherein
the control device has
a control device side communication interface to be connected to the first position information transmission device and
a means to transmit data associating unique identification information of each of the position information transmission devices with the position information to the first position information transmission device via the communication interface,
the first position information transmission device has
a first recording unit that records the unique identification information of the first position information transmission device, the position information, and an ID of a pseudo spread code for spreading the spectrum of the position information,
a transmission device side communication interface for communicating with the control device, and
a first control unit that, when data associating the identification information with the position information is input from the transmission device side communication interface, controls the first recording unit to record the position information associated with the identification information if the data includes the identification information of the first position information transmission device, and controls the first transmitting unit to transmit the data by wireless if the data includes the identification information of other than the first position information transmission device,
the second position information transmission device has
a second recording unit that records the unique identification information of the second position information transmission device, the position information, and the ID of the pseudo spread code for spreading the spectrum of the position information,
a second receiving unit that receives the spread spectrum signal transmitted by wireless, and
a second control unit that, when data associating the identification information with the position information is included in the spread spectrum signal received by the second receiving unit, controls the second recording unit to record the position information associated with the identification information if the data includes the identification information of the second position information transmission device, and controls the second transmitting unit to transmit the data by wireless if the data includes the identification information of other than the second position information transmission device.

13. The position information transmission system according to claim 12, wherein
the second position information transmission device is located in a transmitting area where the first position information transmission device can transmit the spread spectrum signal by wireless, and
the first position information transmission device transmits, by wireless, the data associating the identification information with the position information as the spread spectrum signal from the first transmitting unit.

14. The position information transmission system according to claim 13, wherein
different IDs of the pseudo spread code are assigned to the first position information transmission device and the second position information transmission device.

15. The position information transmission system according to any one of claims 12 to 14, wherein
another position information transmission device is located in a transmitting area where the second position information transmission device can transmit the spread spectrum signal by wireless, and
the another position information transmission device has
a receiving unit that receives the spread spectrum signal transmitted by wireless, and
a control unit that, when data associating the identification information with the position information is included in the spread spectrum signal received by the receiving unit, controls the recording unit of the another position information transmission device to record the position information associated with the identification information if the data includes the identification information of the another position information transmission device.

16. The position information transmission system according to claim 13, wherein
different IDs of the pseudo spread code are assigned to the second position information transmission device and the another position information transmission device.

17. The position information transmission system according to any one of claims 12 to 16, wherein
the first position information transmission devise further has a separate transmission means that separates the data and controls the first transmitting unit to transmit separate data sequentially when the data to be transmitted from the first transmitting unit exceeds a predetermined size, and
the second position information transmission devise further has a separate receiving means that restores the original data from the plural separate data received by the second receiving unit.

18. A position information setting method for at least a first position information transmission device, a second position information transmission device and a control device to control position information of the position information transmission devices, wherein
the position information is assigned from the control device to each of the position information transmission devices, the method comprising:
a data input step in which data associating identification information with the position information is input from the control device to the first position information transmission device via a predetermined communication interface,
a first setting step in which the position information associated with the identification information is assigned to the first position information transmission device if the identification information included in the data input to the first position information transmission device is unique identification information for the first position information transmission device,
a first transmitting step in which the first position information transmission device converts the data to a spread spectrum signal and transmits the spread spectrum signal by wireless if the data input to the first position information transmission device includes identification information of other than the first position information transmission device,
a second setting step in which the position information associated with the identification information is assigned to the second position information transmission device if the data included in the spread spectrum signal received by the second position information transmission device includes unique identification information for the second position information transmission device,
a second transmitting step in which the second position information transmission device converts the data to a spread spectrum signal and transmits the spread spectrum signal by wireless if the data included in the spread spectrum signal received by the second position information transmission device includes identification information of other than the second position information transmission device.
